# EUROPÄISCHE PATENTSCHRIFT

(11) **EP 0 462 191 B1**
(45) Veröffentlichungstag und Bekanntmachung des Hinweises auf die Patenterteilung: **17.02.1993**
(21) Anmeldenummer: 90904765.6
(22) Anmeldetag: 28.03.1990
(51) Int. Cl.: G08G 1/0967

(54) **RUNDFUNKEMPFÄNGER, INSBESONDERE FAHRZEUGEMPFÄNGER**
BROADCAST RECEIVER, IN PARTICULAR FOR VEHICLES
RECEPTEUR RADIO, ET PLUS PARTICULIEREMENT RECEPTEUR POUR VEHICULES

(30) Priorität: 28.04.1989 DE 3914104
(43) Veröffentlichungstag der Anmeldung: 27.12.1991
(73) Patentinhaber: ROBERT BOSCH GMBH, 70442 Stuttgart (DE)
(72) Erfinder: DUCKECK, Ralf, D-3200 Hildesheim (DE); BRÄGAS, Peter, D-3200 Hildesheim (DE)
(86) Internationale Anmeldenummer: DE9000250
(87) Internationale Veröffentlichungsnummer: WO9013882

(56) Entgegenhaltungen:
- EP-A- 0 263 332
- EP-A- 0 290 679
- EP-A- 0 300 205

## Beschreibung

Die Erfindung betrifft einen Rundfunkempfänger mit einem Decoder zur Decodierung digital codiert empfangener Verkehrsnachrichten und Programmidentifikations Codes nach dem Oberbegriff des Anspruchs 1.

In der EP-A-0 290 679 wird ein Verfahren zur Dekodierung digital codierter Verkehrsnachrichten beschrieben.

In der DE-A- 35 36 820 ist ein Verkehrsfunk-Decoder beschrieben, welcher zur Verarbeitung digitaler Signale eingerichtet ist. Diese Signale sind einem Hilfsträger, der zusammen mit dem FM-Rundfunk-Programm über Rundfunksender ausgestrahlt wird, überlagert. Dadurch kann die Information, die in diesen digitalen Signalen vorhanden ist, ungestört parallel zu dem eigentlichen Rundfunkprogramm übertragen werden. Dies betrifft insbesondere auch Verkehrsnachrichten, welche sich durch Demodulation des erwähnten Hilfsträgers entschlüsseln lassen.

Werden die als digitale Signale übertragenen Verkehrsnachrichten nach dem selben Bildungsgesetz, wie die im Klartext ausgestrahlten Verkehrsnachrichten abgefaßt, so können statt der vollständigen Informationen auch Speicheradressen übertragen werden, die in empfängerseitigen Speichern abgelegte standardisierte Texte aufrufen. Dadurch kann man mit einer wesentlich geringeren Datenkapazität bei der Übertragung auskommen. Als Konsequenz ergibt sich, daß nun wesentlich mehr Verkehrsnachrichten über einzelne Ereignisse übermittelt werden können als dies bisher der Fall ist.

Unter Beibehaltung des bisherigen Auswahlkriteriums für die Verkehrsnachrichten, die sich im wesentlichen nach der Zahl der betroffenen Autofahrer richtet, könnten auch bei zyklischer Wiederholung überregionale, auf das Gebiet der Bundesrepublik Deutschland und gegebenenfalls der angrenzenden Nachbarländer bezogene Verkehrsnachrichten über sämtliche UKW-Senderketten übertragen werden. Eine andere Möglichkeit besteht darin, die Region, auf die sich die Verkehrsnachrichten beziehen, etwa auf das Versorgungsgebiet des Senders oder der Senderkette zu beschränken, dafür aber die Auswahl der Verkehrsnachrichten auch auf solche Ereingnisse auszudehnen, die nur wenige Autofahrer betreffen.

Welche Auswahl auch bei den übermittelten Verkehrsnachrichten getroffen wird, die Vielzahl der Nachrichten würde die Aufmerksamkeit des Autofahrers überfordern, wenn er sie alle optisch oder akustisch übermittelt bekäme.

Es ist bereits vorgeschlagen worden, bei den angezeigten oder wiedergegebenen Verkehrsnachrichten eine Auswahl zu treffen. Dies kann z.B. anhand der vorgesehenen Fahrtroute erfolgen, die der Autofahrer als Daten über die zu fahrende Strecke über eine Eingabeeinrichtung eingegeben hat. Es wird dann sichergestellt, daß nur diejenigen Verkehrsnachrichten auf der Ausgabeeinrichtung erscheinen, die diese Fahrtroute betreffen.

Allerdings kann die Beschränkung auf die eingeschlagene Fahrtroute zu eng sein, wenn der Autofahrer sich auch für die Verkehrssituation von anderen Orten oder dort länger andauernden Verkehrsbeeinträchtigungen interessiert, da er diese Orte eventuell kurzfristig anfahren möchte.

Befindet sich der Autofahrer nun in einem Grenz- oder Obergangsgebiet von Sendern oder Senderketten, die nur regional begrenzt Verkehrsnachrichten aussenden, so besteht die Möglichkeit, daß gerade ein Sender empfangen wird, der zwar Verkehrsnachrichten ausstrahlt, nicht aber die gerade interessierende Region berücksichtigt.

Der Erfindung liegt die Aufgabe zugrunde, einen Fahrzeugempfänger nach dem Oberbegriff des Anspruchs 1 dahingehend zu verbessern, daß unabhängig von einer eingeschlagenen Fahrtroute an ausgewählten Orten vorliegende Verkehrsereignisse aus der Menge der insgesamt übertragenen Verkehrsnachrichten ausgewählt und angezeigt werden können und darüber hinaus sichergestellt wird, daß Ereignisse in diesen ausgewählten Orten in die Verkehrsnachrichten einbezogen werden.

Diese Aufgabe wird bei einem Fahrzeugempfänger nach dem Oberbegriff des Anspruchs 1 durch die im kennzeichnenden Teil angegebenen Merkmale gelöst.

Die erfindungsgemäße Ausgestaltung des Fahrzeugempfängers ermöglicht es, eine individuelle, d.h., sowohl grobe als auch feine Zoneneinteilung vorzusehen und unterscheidet sich damit von dem Vorschlag der EBU (European Broadcasting Union), welche starre regionale Zonen vorsieht.

Die durch die Erfindung mögliche Einteilung kann dabei unterschiedliche Verkehrsdichten sowie geographische, politische oder auch individuelle Grenzen berücksichtigen. Besonders hervorzuheben ist dabei die Möglichkeit, für ein größeres Gebiet, z.B. die Bundesrepublik Deutschland eine größere Anzahl von Zonen vorzusehen, als es der EBU-Vorschlag mit 16 Zonen tut. Dabei kann überprüft werden, ob der eingestellte oder die empfangbaren Sender überhaupt für Verkehrsnachrichten aus dem interessierenden regionalen Gebiet zuständig sind.

Darüber hinaus sind die Voraussetzungen geschaffen, falls der eingestellte Sender keine Verkehrsnachrichten aus dem interessierenden Gebiet übertragen würde, andere empfangbare Sender jedoch für dieses Gebiet mit zuständig sind, diese Sender leichter aufzufinden. Durch die gemeinsame Kennung der streckenspezifischen Merkmale begrenzter geographischer Region sowie der Programm Identifikations Codes werden die Programm Identifikantions Codes automatisch mit aufgerufen, wenn eine Auswahl der streckenspezifischen Merkmale nach einer bestimmten geographischen Region erfolgt. Handelt es sich um das RDS-System, das für die Übertragung der digital codierten Verkehrsnachrichten verwendet wird, so kommt als weiterer Vorteil hinzu, daß der dort verwendete Programm Identifikations Code zyklisch mit jeder RDS-Gruppe ausgestrahlt wird und der Vergleich des gerade empfangenen Senders mit dem gespeicherten Programm Identifikations Code sehr schnell möglich ist.

Vorzugsweise werden unter streckenspezifischen Merkmalen begrenzter geographischer Regionen Ortsnamen verstanden, da diese praktisch immer zur Bestimmung eines Streckenpunktes oder Streckenabschnittes herangezogen werden. Damit ist es auch möglich, andere streckenspezifische Angaben, wie Streckenführungsnamen aus diesen Ortsnamen abzuleiten. Eine gemeinsame Verbindung der Ortsnamen sowie der Programm Identifikations Codes gestatten es, die zusammengehörenden Informationen bei wenig Speicherbedarf unterzubringen und z.B. über eine gemeinsame Adresse aufzurufen. Dadurch wird die für die Ermittlung der Daten erforderliche Zugriffszeit sehr stark reduziert.

Eine Alternative sieht vor, die Kennungen in Speicherfeldern zu speichern, die einen Speicherplatz mit einer Adresse eines Speicherplatzes eines zugeordneten Ortsnamens umfassen.

Bei dieser Lösung müssen zwar unterschiedliche Speicherfelder oder Speicherplätze adressiert werden, durch Ersatz des Ortsnamens an Stelle einer Adresse läßt sich aber auch hier eine mit relativ wenig Speicherkapazität auskommende Lösung realisieren.

Andere Weiterbildungen sehen vor, die Kennungen der geographischen Regionen als Untermengen von übergeordneten Mengen auszubilden, die gemeinsame Bestandteile der Kennungen besitzt. Diese Regionen können sich dann gegenseitig überlappen.

Hierdurch wird vermieden, daß der Autofahrer bei der Auswahl der Region auf ein starres Skelett angewiesen ist. Je nach Art der erwarteten Verkehrsereignisse, z.B. bei Militärübungen oder bei Naturkatastrophen kann der Autofahrer entscheiden, ob er nur die Verkehrsnachtichten eines kleinen Gebietes, z.B. eines Landkreises oder die eines Bundeslandes erfahren möchte. Durch die Überlappung besteht zudem die Möglichkeit, den Ort von besonderem Interesse in den Mittelpunkt der Region zu verlegen und so auch noch Verkehrsnachrichten aus den benachbarten Randgebieten einzubeziehen.

Besonders zweckmäßig ist es, bei mehreren Sendern oder Senderketten eines Versorgungsgebiets, die parallel Verkehrsnachrichten ausstrahlen, alle oder eine Auswahl von Programm Identifikations Codes dieser Sender oder Senderketten zu speichern. Man kann dann bei ungünstigen Empfangsverhältnissen des einen Senders auf einen anderen Sender ausweichen und so sicherstellen, daß bei Übertragung relevanter Verkehrsnachrichten diese auch störungsfrei empfangen und decodiert werden können.

Besonders zweckmäßig ist es, den Rundfunkempfänger mit den erfindungsgemäßen Merkmalen mit einem Suchlauf zu versehen, welcher durch die Eingabeeinrichtung oder der Vergleicher für Programm Identifikations Codes der Sender mit gepeicherten Programm Identifikations Codes bei Nichtübereinstimmung dieser Codes gestartet und bei Übereinstimmung gestoppt wird.

Auf diese Weise wird die Bedienung wesentlich vereinfacht, indem der Autofahrer also nur die gewünschte geographische Region eingeben muß, aus der er Verkehrsnachrichten hören oder angezeigt bekommen möchte, die Einstellung der entsprechenden Sender aber dem Empfänger überläßt. Dabei kann als weitere Verbesserung auch ein Vergleich zwischen den in Frage kommenden Sendern vorgenommen werden und der bestempfangbare Sender, das kann entweder der stärkste oder der mit den geringsten Übertragungsfehlern sein, ausgewählt werden.

Weiterbildungen und vorteilhafte Ausgestaltungen der Erfindung ergeben sich aus den Ansprüchen, der weiteren Beschreibung und der Zeichnung, die ein Ausführungsbeispiel der Erfindung veranschaulicht.

In der Zeichnung zeigen:
Fig. 1 ein Blockschaltbild eines Fahrzeugempfängers der Erfindung und
Fig. 2 eine Tabelle eines Speicherauszugs nach einer Ausgestaltung der Erfindung.

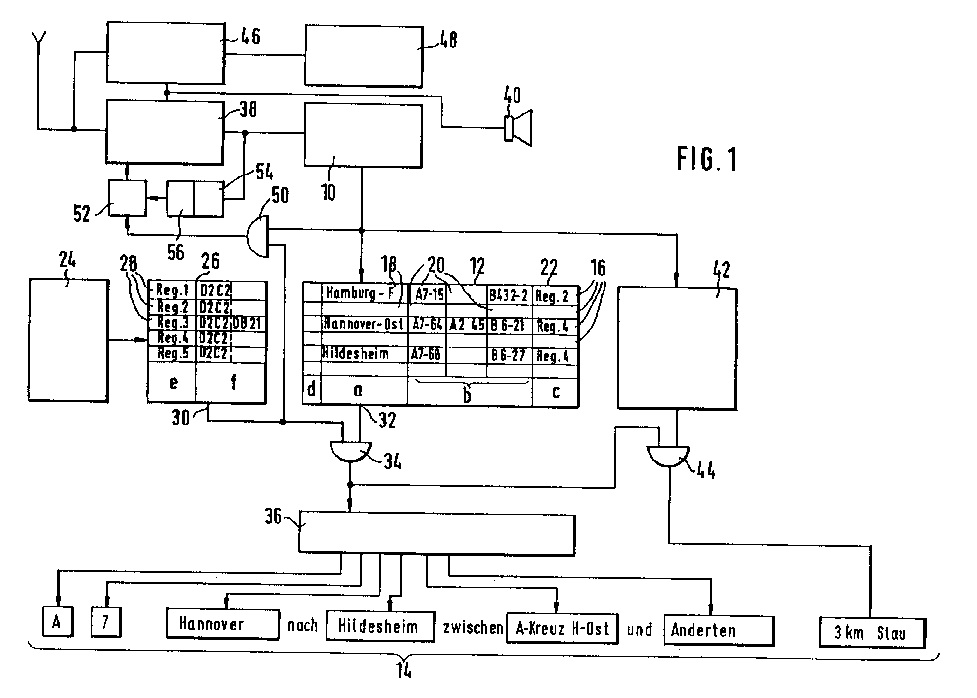

Fig. 1 zeigt einen Fahrzeugempfänger, der einen ersten Empfangsteil 46 mit einem Lautsprecher 40 sowie einen dem Empfangsteil 46 nachgeschalteten Decoder 48 und einen weiteren Empfangsteil 38 mit einem dem Empfangsteil 38 nachgeschalteten Decoder 10 zur Decodierung digital codiert empfangener Verkehrsnachrichten sowie Programm Identifikations Codes umfaßt.

Der Decoder 10 ist mit Adresseingängen einer Speichereinrichtung 12 verbunden. Die Speichereinrichtung 12 umfaßt Speicherfelder 16 mit Speicherplätzen 18, 20 und 22, die über Adressen anwählbar sind. Mit der Speichereinrichtung 12 ist ein logisches Verknüpfungsglied 34 verbunden, das über einen Demultiplexer 36 zu einer optischen Ausgabeeinrichtung 14 führt. Weiterhin ist ein Ereignisspeicher 42 vorgesehen, dessen Adresseingänge ebenfalls vom Decoder 10 angesteuert sind und der zu einem weiteren Feld der optischen Ausgabeeinrichtung 14 führt.

Eine Eingabeinrichtung 24 für streckenspezifische Merkmale ist mit einer weiteren Speichereinrichtung 26 verbunden, die Speicherfelder 28 für Regionkennungen e und Programm Identifikations Codes f enthält. Ein Ausgang 30 der Speichereinrichtung 26 ist ebenso, wie der bereits erwähnte Ausgang 32 der Speichereinrichtung 12 mit dem logischen Verknüpfungsglied 34 verbunden.

Außerdem führt der Ausgang 30 der Speichereinrichtung 26 zu einem Vergleicher 50, der ebenfalls Signale des Decoders 10 erhält. Dieser Vergleicher 50 dient zur Prüfung von Übereinstimmungen zwischen dem übertragenen und dem in der Speichereinrichtung 26 ausgewählten Programm Identifikations Code. Sein Ausgang könnte zu einem weiteren Anzeigefeld der optischen Ausgabeeinrichtung geführt sein, ist jedoch im Ausführungsbeispiel mit einem Sendersuchlauf 52 verbunden. Der Sendersuchlauf 52 wiederum steuert das Empfangsteil 38.

Schließlich ist noch ein Speicher 54 für die empfangbaren Sender und eine Auswahlschaltung 56 für den bestempfangbaren Sender vorgesehen, die Signale des Empfangsteils 38 erhalten und mit dem Sendersuchlauf 52 zusätzlich verbunden sind.

Bei der Speichereinrichtung 12 werden über Adressen d, die durch Daten des Decoders 10 angesprochen werden, Speicherfelder 16 adressiert. Die Speicherfelder 16 sind unterteilt in Speicherplätze 18 für Ortsnamen a, Speicherplätze 20 für andere streckenspezifische Merkmale b, wie Autobahnen oder Bundesstraßen mit Abfahrtzahlen und Speicherplätze 22 mit Regionkennungen c. Im vorliegenden Fall ist jedem Ortsnamen a nur eine Regionkennung c zugeordnet. Bei Überlappung ist es jedoch auch möglich, mehrere Regionkennungen c zu verwenden. Außerdem können die Regionkennungen c hierarchisch aufgebaut sein, so daß es gelingt, auch hier eine grobe oder feine Unterteilung vorzunehmen.

Auch die Speichereinrichtung 26 enthält adressierbare Speicherfelder 28. Hier sind in den Speicherfeldern 28 Regionkennungen e gespeichert, wie sie auch als Regionkennungen c auf den Speicherplätzen 22 der Speichereinrichtung 12 vorkommen. Außerdem enthalten die Speicherfelder 28 Programm Identifikations Codes f derjenigen Sender oder Senderketten, die für Verkehrsnachrichten der betreffenden Regionen mit den Regionkennungen e zuständig sind. Dabei können jeder Regionkennung e ein oder mehrere Programm Identifikations Codes f zugewiesen sein.

Ist der Empfänger zum Empfang von Verkehrsnachrichten vorgesehen, die nach dem RDS-System über den "Traffic-Message-Channel" übertragen werden, so stimmt der Programm Identifikations Code mit dem PI-Code gemäß den EBU-Spezifikationen überein, wie er in jeder RDS-Gruppe in Block 1 steht. Der Programm Identifikations Code umfaßt dann vier Hexadezimalzeichen. Das erste Zeichen kennzeichnet das Land und ist z.B. für die Bundesrepublik Deutschland sowie Libyen der Buchstabe D. Das zweite Zeichen stellt eine Flächenkennziffer dar, die in der Bundesrepublik Deutschland z.B. mit den ARI Verkehrszonen A - F übereinstimmt. Das dritte und vierte Zeichen steht schließlich für einen Sender oder eine Senderkette einer Rundfunkanstalt. So lautet der PI Code für NDR 2 z.B. D2 C2.

Wünscht der Autofahrer nur Verkehrsnachrichten aus einer bestimmten Region übermittelt zu bekommen, so kann er durch Betätigen der Eingabeeinrichtung 24 die gewünschte Region mit der Regionkennung e auswählen. Dabei wird das entsprechende Speicherfeld 28 adressiert, das die betreffende Regionkennung e sowie die Programm Identifikations Codes f der für diese Region zuständigen Sender oder Senderketten enthält. Diese Programm Identifikations Codes f stehen nun auch am Vergleicher 50 an, der sie mit dem Programm Identifikations Code des gerade empfangenen und vom Decoder 10 decodierten Senders vergleicht.

Stimmen die Programm Identifikations Codes nicht über- ein, so wird der angeschlossene Sendersuchlauf 52 gestartet und veranlaßt das Empfangsteil 38 sich auf den nächsten empfangbaren Sender abzustimmen. Besitzt dieser Sender nun einen Programm Identifikations Code, der mit dem im Speicherfeld 28 Ausgewählten übereinstimmt, so wird durch das Ausgangssignal des Vergleichers 50 der Suchlauf 52 gestoppt und das Empfangsteil bleibt auf dem betreffenden Sender eingerastet. Andernfalls wird ein weiterer Sender gesucht.

Sind mehrere empfangbare Sender vorhanden, so kann der Sendersuchlauf auch derart gesteuert sein, daß er zunächst den gesamten Empfangsbereich nach empfangbaren Sendern überstreicht und die Frequenzen der empfangbaren Sender in einem Speicher 54 zwischengespeichert und von einer Auswahlschaltung 56 der bestempfangbare Sender ausgewählt wird. Dieser bestempfangbare Sender wird dann nach dem Überstreichen des Empfangsbereichs gezielt angewählt.

Nachdem also der oder einer der für Verkehrsnachrichten des ausgewählten Gebietes zuständige Sender eingestellt ist, werden die decodierten Verkehrsnachrichten danach ausgewählt, ob sie die interessierende Region betreffen. Dies geschieht, indem die Regionkennungen e mit den Regionkennungen c der gerade adressierten Speicherfelder 16 auf Übereinstimmung geprüft werden. Solange keine Übereinstimmung vorliegt, verhindert das logische Verknüpfungsglied 34, daß die entsprechenden Meldungen angezeigt werden. Wird dagegen ein Speicherfeld 16 adressiert, das die gleiche Regionkennung c aufweist, wie die ausgewählte Regionkennung e in einem der Speicherfelder 28, so gelangen die den Meldungstext betreffenden Daten über den Demultiplexer zur optischen Ausgabeeinrichtung 14. Gleichzeitig wird über ein weiteres logisches Verknüpfungsglied 44 auch der Ereignisspeicher 42 freigegeben, worauf auch das gespeicherte Ereignis in dem entsprechenden Anzeigefeld der Ausgabeeinrichtung 14 erscheint.

Ein Meldungstext, der aus gespeicherten Daten durch entsprechende Adressierung der Speicherplätze aufgerufen und zusammengestellt ist, ist hier in den Anzeigefeldern der Ausgabeeinrichtung 14 wiedergegeben.

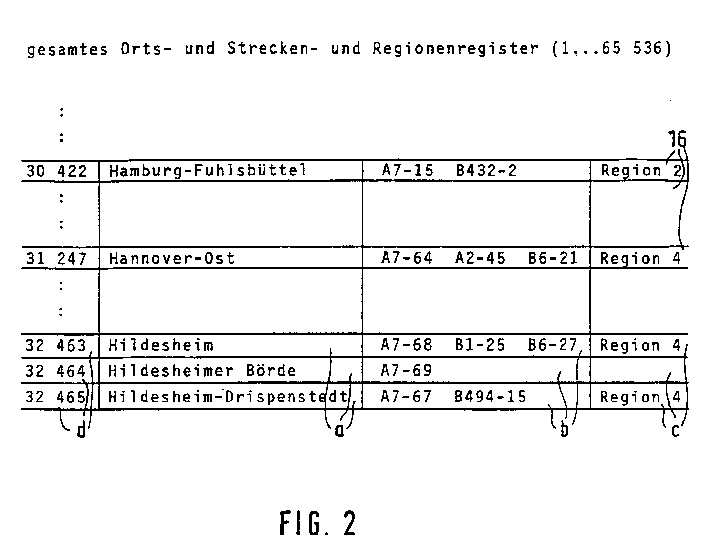

Fig. 2 zeigt noch einen Speicherauszug aus der Speichereinrichtung 12, wobei in den Speicherfeldern 16 das Orts- Strecken- und Regionenregister gespeichert ist. Für das Gebiet der Bundesrepublik Deutschland ergeben sich 65.536 unterschiedliche Ortsnamen zur lokalen Bestimmung von Verkehrsereignissen, die in der Speichereinrichtung 12 jedoch nur einmal abgelegt sind. Dementsprechend sind 2¹⁶ unterschiedliche Bitkombinationen zur Adressierung der Speicherfelder 16 erforderlich. Diese Adressen sind mit d bezeichnet.

Neben den Ortsnamen a sind noch andere streckenspezifische Merkmale, z.B. Streckenführungsnamen gespeichert. Die Streckenführungsnamen bestehen aus z.B. einer oder mehrerer Autobahn- oder Bundesstraßenabfahrten . In besonders verkehrsdichten Gebieten z.B. wenn mehrere Autobahnen kreuzen und unterschiedliche Kennzeichnungen von dem Kreuzungspunkt an besitzen, können eine Vielzahl von Streckenführungsnamen einem einzigen Ortsnamen zugeordnet werden.

Schließlich ist in den Speicherfeldern noch Platz für Speicherplätze, die die für den Abgleich mit der weiteren Speichereinrichtung 26 erforderlichen Regionkennungen c enthalten. Diese Regionkennungen können aus Ziffern zusammengesetzt sein, die von 1 bis zu der Zahl ansteigen, in der ein Vorhersagegebiet für die Verkehrsnachrichten in Zonen unterteilt ist. Dabei enthält jeder Ortsname, der in dieselbe geographische Region einbezogen wird dieselbe Regionkennung. Bei überlappenden Regionen können einem Ortsnamen auch mehrere Regionkennungen c zugewiesen werden.

## Patentansprüche

1. Rundfunkempfänger, insbesondere Fahrzeugempfänger, mit einem Decoder (10) zur Decodierung digital codiert empfangener Verkehrsnachrichten und Programm Identifikations Codes, insbesondere solcher, die nach dem RDS-System übertragen sind, einer Speichereinrichtung (12) für streckenspezifische Merkmale und einer optischen und/oder akustischen Ausgabeeinrichtung (14) für die Verkehrsnachrichten als aus der Speichereinrichtung (12) ausgelesene Informationen, dadurch gekennzeichnet, daß streckenspezifische Merkmale (a, b) begrenzter geographischer Regionen sowie Programm Identifikations Codes (f) der Verkehrsnachrichten für diese Regionen ausstrahlenden Sender oder Senderketten mit gemeinsamen Kennungen (c, e) versehen sind, die streckenspezifische Merkmale (a, b) zusammen mit der Kennung (c) in der Speichereinrichtung (12) und die Programm Identifikations Codes (f) zusammen mit der Kennung (e) in einer weiteren Speichereinrichtung (26) gespeichert sind und daß ein Vergleicher (50) für die vom Decoder (10) gelieferten Programm Identifikations Codes mit dem aus der weiteren Speichereinrichtung (26) ausgelesenen Programm Identifikations Code vorgesehen ist.

2. Rundfunkempfänger nach Anspruch 1, dadurch gekennzeichnet, daß unter den streckenspezifischen Merkmalen begrenzter geographischer Regionen Ortsnamen (a) mit der Kennung (c) versehen sind.

3. Rundfunkempfänger nach Anspruch 1 oder 2, dadurch gekennzeichnet, daß die Kennungen (c) in Speicherfeldern (16) gespeichert sind, die auch einen Speicherplatz (18) mit einem zugeordneten Orstnamen (a) umfassen und daß die Speicherfelder (16) jeweils eine gemeinsame Adresse (d) besitzen.

4. Rundfunkempfänger nach Anspruch 1 oder 2, dadurch gekennzeichnet, daß die Kennungen in Speicherfeldern gespeicher sind, die auch einen Speicherplatz mit einer Adresse eines Speicherplatzes eines zugeordneten Ortsnamens umfassen.

5. Rundfunkempfänger nach Anspruch 4, dadurch gekennzeichnet, daß Kennungen in Speicherfeldern gespeichert sind, die bei gleicher geographischer Region Adressen von Speicherfeldernder übrigen, zur selben Region gehörenden Merkmale enthalten.

6. Rundfunkempfänger nach einem oder mehreren der Ansprüche 1 - 5, dadurch gekennzeichnet, daß die Kennungen (c) der geographischen Regionen Untermengen von übergeordneten Mengen bilden, die gemeinsame Bestandteile der Kennungen (c) besitzen.

7. Rundfunkempfänger nach Anspruch 6, dadurch gekennzeichnet, daß die Regionen sich gegenseitig überlappen.

8. Rundfunkempfänger nach einem oder mehreren der Ansprüche 1 - 7, dadurch gekennzeichnet, daß die Programm Identifikations Codes (f) in Speicherfeldern (28) gespeichert sind, die mehrere Speicherplätze für Programm Identifikations Codes von unterschiedlichen Sendern oder Senderketten aufweisen, die Verkehrsnachrichten für dieselbe Region aussenden.

9. Rundfunkempfänger nach einem oder mehreren der Ansprüche 1 bis 8, dadurch gekennzeichnet, daß eine Eingabeeinrichtung (24) zur Auswahl und Vorgabe von Kennungen (e) mit der weiteren Speichereinrichtung (26) verbunden ist und daß die Adresseingänge oder die Ausgänge (30, 32) der die streckenspeziefischen Merkmale (a, b), insbesondere die Ortsnamen enthaltenden Speichereinrichtung (12) mit der weiteren Speichereinrichtung (26) zur Auswahl übereinstimmender Kennungen (c, e) über logische Verknüpfungsglieder (34) verknüpft sind und daß ein Sendersuchlauf (52) vorgesehen ist, welcher durch die Eingabeeinrichtung (24) oder den Vergleicher (50) bei Nicht-Übereinstimmung der Codes gestartet und durch den Vergleicher (50) bei Übereinstimmung der Codes gestoppt wird.

10. Rundfunkempfänger nach einem oder mehreren der Ansprüche 1 bis 9, dadurch gekennzeichnet, daß ein gesonderter Empfangsteil (38) im Rundfunkempfänger vorgesehen ist, mit dem der Decoder (10) verbunden ist.

11. Rundfunkempfänger nach Anspruch 9 oder 10, dadurch gekennzeichnet, daß ein Speicher (54) für die empfangbaren Sender und eine Auswahlschaltung (56) für den bestempfangbaren Sender vorgesehen sind.

## Claims

1. Radio receiver, in particular vehicle-mounted receiver, having a decoder (10) for decoding traffic information received in digitally coded form and radio station identification codes, in particular such as are transmitted in accordance with the RDS system, a storage device (12) for route-specific features and an optical and/or audible output device (14) for the traffic information as information read out of the storage device (12), characterised in that route-specific features (a, b) of limited geographic regions and radio station identification codes (f) for transmitters or series of transmitters transmitting the traffic information for these regions are provided with common identification codes (c, e), the route-specific features (a, b) together with the identification code (c) are stored in the storage device (12) and the radio station identification codes (f) together with the identification code (e) are stored in a further storage device (26), and in that a comparator (50) is provided for the radio station identification codes, supplied by the decoder (10), with the radio station identification code read out from the further storage device (26).

2. Radio receiver according to Claim 1, characterised in that names of localities (a) are provided with the identification code (c) under the route-specific features of limited geographic regions.

3. Radio receiver according to Claim 1 or 2, characterised in that the identification codes (c) are stored in storage fields (16) which also comprise a storage location (18) with an assigned name of a locality (a) and in that the storage fields (16) each have a common address (d).

4. Radio receiver according to Claim 1 or 2, characterised in that the identification codes are stored in storage fields which also comprise a storage location with an address of a storage location of an assigned name of a locality.

5. Radio receiver according to Claim 4, characterised in that identification codes are stored in storage fields which, in the case of identical geographic regions, contain addresses of storage fields of the other features associated with the same region.

6. Radio receiver according to one or more of Claims 1 - 5, characterised in that the identification codes (c) of the geographic regions form sub-quantities of super-ordinate quantities which have common components of the identification codes (c).

7. Radio receiver according to Claim 6, characterised in that the regions overlap one another.

8. Radio receiver according to one or more of Claims 1 - 7, characterised in that the radio station identification codes (f) are stored in storage fields (28) which have a plurality of storage locations for radio station identification codes of different transmitters or series of transmitters which transmit traffic information for the same region.

9. Radio receiver according to one or more of Claims 1 to 8, characterised in that an input device (24) for selecting and predetermined identification codes (e) is connected to the further storage device (26) and in that the address inputs or the outputs (30, 32) of the storage device (12) containing the route-specific features (a, b), in particular the names of localities, are connected to the further storage device (26) for selecting corresponding identification codes (c, e) by means of logical connection elements (34) and in that a transmitter search function (52) is provided which is started by the input device (24) or the comparator (50) in the case of non-correspondence of the codes and is stopped by the comparator (50) when the codes correspond.

10. Radio receiver according to one or more of Claims 1 to 9, characterised in that a separate reception component (38) is provided in the radio receiver to which the decoder (10) is connected.

11. Radio receiver according to Claim 9 or 10, characterised in that a memory (54) is provided for the transmitters which can be received and a selection circuit (56) is provided for the receiver for which reception is best.

## Revendications

1. Récepteur radio, notamment autoradio, comportant un décodeur (10) pour décoder des informations de circulation reçues en code numérique et des codes d'identification de programmes, notamment des codes transmis selon le système RDS, une mémoire (12) pour les références spécifiques d'un trajet et un dispositif de sortie optique et/ou acoustique (14) pour les informations de circulation constituées par des informations lues dans la mémoire (12), récepteur caractérisé en ce que les références spécifiques au trajet (a, b) de régions géographiquement délimitées ainsi que les codes d'identification de programmes (f) des informations de circulation pour les émetteurs ou les chaînes d'émetteurs émettant pour ces régions, ont des références communes (c, e), les références spécifiques au trajet (a, b) ainsi que la référence (c) étant inscrites dans la mémoire (12) et les codes d'identification de programmes (s) ainsi que la référence (e) étant inscrits dans une autre mémoire (26) et en ce qu'un comparateur (50) est prévu pour les codes d'identification de programmes fournis par le décodeur (10) et pour le code d'identification de programmes lus dans l'autre mémoire (26).

2. Récepteur radio selon la revendication 1, caractérisé en ce que les références spécifiques d'un trajet pour des régions géographiquement délimitées comprennent des noms de lieux (a) avec une référence (c).

3. Récepteur radio selon la revendication 1 ou 2, caractérisé en ce que les références (c) sont enregistrées dans des champs de mémoire (16) qui possèdent également un emplacement de mémoire (18) avec un nom de lieu (a) associé et en ce que les champs de mémoire (16) ont chaque fois une adresse commune (d).

4. Récepteur radio selon la revendication 1 ou 2, caractérisé en ce que les références sont enregistrées dans des champs de mémoire qui comprennent également un emplacement de mémoire dont l'adresse correspond au nom du lieu associé à un emplacement de mémoire.

5. Récepteur radio selon la revendication 4, caractérisé en ce que les références sont enregistrées dans des champs de mémoire qui pour une même région géographique contiennent les adresses des autres chambres de mémoire pour les références appartenant à la même région.

6. Récepteur radio selon une ou plusieurs des revendications 1 à 5, caractérisé en ce que les références (c) des régions géographiques constituent des sous-ensembles, d'autres ensembles qui possèdent le même composant des références (c).

7. Récepteur radio selon la revendication 6, caractérisé en ce que les régions se chevauchent les unes les autres.

8. Récepteur radio selon une ou plusieurs des revendications 1-7, caractérisé en ce que les codes d'identification de programmes (f) sont inscrits dans des champs de mémoire (28) qui possèdent plusieurs emplacements de mémoire pour des codes d'identification de programmes correspondant à des émetteurs ou des chaînes d'émetteurs différents qui émettent les informations de circulation correspondant à cette même région.

9. Récepteur radio selon une ou plusieurs des revendications 1 à 8, caractérisé en ce qu'un dispositif d'entrée (24) pour sélectionner et prédéterminer des références (e) est relié à l'autre mémoire (26) et en ce que les entrées et sorties d'adresses (30, 32) de la mémoire (12) contenant les références spécifiques de trajets (a, b), notamment les noms de lieux, sont combinées avec l'autre mémoire (26) pour la sélection de références concordantes (c) et (e) par des éléments de combinaison logique (34) et en ce qu'il est prévu une recherche automatique d'émetteur (52) qui est mise en route par le dispositif d'entrée (24) ou par le comparateur (50) en cas de non concordance des codes et qui est arrêtée par le comparateur (50) en cas de concordance des codes.

10. Récepteur radio selon une ou plusieurs des revendications 1 à 9, caractérisé par une partie de récepteur (38) particulière prévue dans le récepteur radio et qui est reliée au décodeur (10).

11. Récepteur radio selon les revendications 9 ou 10, caractérisé par une mémoire (54) pour les émetteurs susceptibles d'être reçus et un circuit de sélection (56) pour les émetteurs dont la réception est la meilleure.
